# EUROPÄISCHE PATENTANMELDUNG

(11) **EP 2 840 676 A1**
(43) Veröffentlichungstag der Anmeldung: **25.02.2015**
(21) Anmeldenummer: 12000678.8
(22) Anmeldetag: 01.02.2012
(51) Int. Cl.: H02J 9/04, B41F 33/00, B41F 33/12

(54) **Verfahren zum Stillsetzen einer Rollendruckmaschine**

(30) Priorität: 04.02.2011 DE 102011010348
(71) Anmelder: manroland web systems GmbH, 86153 Augsburg (DE)
(72) Erfinder: Liebold, Rainer, 08527 Plauen (DE); Posselt, Raimund, 08468 Reichenbach (DE); Schädlich, Ralf, 08529 Plauen (DE); Seyffert, Ulrich, 08548 Syrau (DE); Scharf, Markus, 08525 Plauen (DE)

(57) **Zusammenfassung**

Verfahren zum Stillsetzten einer Rollendruckmaschine mit mehreren Druckmaschinenaggregaten, nämlich mit mindestens einem Rollenwechsler (10), mit mindestens einer dem jeweiligen Rollenwechsler nachgeordneten Druckeinheit (13), mit einem der oder jeder Druckeinheit (13) nachgeordneten Bahnführungs- und/oder Wendeeinheit (18), mit einem der Bahnführungs-und/oder Wendeeinheit nachgeordneten Falzeinheit (19) und mit mindestens einer Bahnüberwachungseinrichtung (32, 33) zur Überwachung einer Bedruckstoffbahn, wobei bei einem Ausfall oder einer Unterversorgung der Netzspannung: a) eine Steuerspannung für elektronische Baugruppen (23, 24, 25, 26, 27) der Druckmaschinenaggregate (10, 13, 18, 19) über mindestens einen Energiespeicher (38) gepuffert wird, b) eine leistungsseitige Versorgungsspannung für elektrische Antriebe der Druckmaschinenaggregate (10, 13, 18, 19) nicht gepuffert wird, sodass über die elektrischen Antriebe im Druckbetrieb aktiv angetriebene Zylinder und Walzen der Druckmaschinenaggregate bei Ausfall oder Unterversorgung der Netzspannung passiv auslaufen; c) die oder jede Druckeinheit (13) in eine Druck-Ab-Stellung derart überführt wird, dass der oder jeder im Druckbetrieb an die jeweilige Bedruckstoffbahn angestellte Druckzylinder der jeweiligen Druckeinheit (13) von der jeweiligen Bedruckstoffbahn abgestellt wird.

## Beschreibung

Die Erfindung betrifft ein Verfahren zum Stillsetzten einer Rollendruckmaschine nach dem Oberbegriff des Anspruchs 1.

Eine Rollendruckmaschine verfügt über eine Vielzahl von Druckmaschinenaggregaten. So verfügt eine Rollendruckmaschine über zumindest einen Rollenwechsler, der dem Bereithalten einer zu bedruckenden Bedruckstoffbahn dient. Dem oder jedem Rollenwechsler ist in Transportrichtung einer zu bedruckenden Bedruckstoffbahn gesehen mindestens eine Druckeinheit nachgeordnet, die zum Bedrucken der jeweiligen Bedruckstoffbahn mindestens einen Druckzylinder aufweist. Vorzugsweise ist dem oder jedem Rollenwechsler oder der einem Rollenwechsler unmittelbar nachgeordneten Druckeinheit ein Einzugwerk zugeordnet, mithilfe dessen eine Bedruckstoffbahn in die dem jeweiligen Rollenwechsler unmittelbar nachgeordnete Druckeinheit eingezogen werden kann. Weiterhin umfasst eine Rollendruckmaschine eine Bahnführungs- und/oder Wendeeinheit, mithilfe derer die oder jede in der oder jeder Druckeinheit bedruckte Bedruckstoffbahn geführt und/oder gewendet und nachfolgend einer der Bahnführungs- und/oder Wendeeinheit nachgeordneten Falzeinheit, die dem Falzen der jeweiligen bedruckten Bedruckstoffbahn und dem Abtrennen von Exemplaren von derselben dient, zugeführt werden kann. Eine Falzeinheit umfasst vorzugsweise mindestens einen Falztrichter zum Längsfalzen der oder jeder Bedruckstoffbahn und mindestens einen Falzapparat zum Abtrennen von Exemplaren sowie gegebenenfalls weiteren Falzen, insbesondere Querfalzen, der abgetrennten Exemplaren. Die oben erwähnten Druckmaschinenaggregate verfügen allesamt über elektrische Antriebe, die über ein Stromversorgungsnetz bzw. Spannungsversorgungsnetz mit Netzspannung versorgt werden, wobei im Druckbetrieb die elektrischen Antriebe der Druckmaschinenaggregate synchronisiert werden, damit die einzelnen Druckmaschinenaggregate mit der gleichen Geschwindigkeit betrieben werden.

Dann, wenn sich im Betrieb einer Rollendruckmaschine insbesondere aufgrund von Instabilitäten im Stromversorgungsnetz bzw. Spannungsversorgungsnetz ein Ausfall oder eine Unterversorgung der Netzspannung ausbildet, kann dies dazu führen, dass die elektrischen Antriebe der Druckmaschinenaggregate der Rollendruckmaschine nicht mehr ausreichend mit Spannung bzw. Strom versorgt werden können, sodass die durch die elektrischen Antriebe angetriebenen Zylinder bzw. Walzen unkontrolliert austrudeln. Hierdurch können massive Störungen und Gefährdungen der Rollendruckmaschine bewirkt werden, insbesondere durch sogenannte Wickler, durch welche Baugruppen der Druckmaschinenaggregate beschädigt werden können.

Aus Gründen einer Betriebssicherheit einer Rollendruckmaschine muss demnach eine Rollendruckmaschine bei Ausfall oder Unterversorgung der Netzspannung definiert still gesetzt werden können.

Die EP 1 223 656 B1 schlägt zum Stillsetzen einer Rollendruckmaschine bei Ausfall oder Unterbrechung der Netzspannung das Ausnutzen einer unterbrechungsfreien Stromversorgung (kurz USV) vor, und zwar derart, dass bei Ausfall der Netzspannung zunächst eine in der Maschinensteuerung der Rollendruckmaschine hinterlegten Steuerfolge zur Auslösung eines definierten Produktionshalts aktivierbar ist, und dass im weiteren Verlauf eine Steuerfolge ausgelöst wird, welche die Rollendruckmaschine in einen Standby-Betrieb versetzt. Das Ausnutzen einer unterbrechungsfreien Stromversorgung kann einen Ausfall oder eine Unterversorgung der Netzspannung für einen definierten Zeitraum vollständig abpuffern und auch eine hochspannungsseitige Versorgungsspannung für elektrische Antriebe der Druckmaschineaggregate aufrecht erhalten. Das Ausnutzen einer solchen unterbrechungsfreien Stromversorgung erfordert jedoch einen relativ hohen Investitionsaufwand, zusätzliche Wartungskosten und zusätzlichen Energiebedarf.

Aus der EP 1 275 197 B1 ist ein weiteres Verfahren zum Stillsetzen einer Rollendruckmaschine bei Ausfall oder Unterbrechung der Netzspannung bekannt, bei welchem ebenfalls eine hochspannungsseitige Versorgungsspannung für elektrische Antriebe der Druckmaschinenaggregate aufrecht erhalten wird, nämlich über ein Fremdnetz, welches den elektrischen Antrieben eine zwischen der vorhandenen Rotationsenergie und der zum Stillsetzen benötigten Prozessenergie erforderliche Differenzenergie bereitstellt. Das Ausnutzen eines derartigen Fremdnetzes ist auch mit einem relativ hohen Investitionsaufwand, zusätzlichen Wartungskosten und Energiekosten verbunden.

Es besteht daher Bedarf an einem Verfahren zum Stillsetzen einer Rollendruckmaschine, mit welchem bei Ausfall oder Unterbrechung der Netzspannung eine Rollendruckmaschine definiert still gesetzt werden kann, und zwar bei geringem Investitionsaufwand, bei geringen Wartungs- und Energiekosten sowie ohne die Notwendigkeit, beim Stillsetzen die oder jede Druckstoffbahn insbesondere im Bereich der Druckwerke abzuschlagen bzw. zu durchtrennen.

Hiervon ausgehend liegt der vorliegenden Erfindung die Aufgabe zugrunde, ein neuartiges Verfahren zum Stillsetzten einer Rollendruckmaschine zu schaffen. Diese Aufgabe wird durch ein Verfahren gemäß Anspruch 1 gelöst.

Erfindungsgemäß wird bei einem Ausfall oder einer Unterversorgung der Netzspannung: a) eine Steuerspannung für elektronische Baugruppen der Druckmaschinenaggregate über mindestens einen Energiespeicher gepuffert wird; b)eine leistungsseitige Versorgungsspannung für elektrische Antriebe der Druckmaschinenaggregate nicht gepuffert wird, sodass über die elektrischen Antriebe im Druckbetrieb aktiv angetriebene Zylinder und Walzen der Druckmaschinenaggregate bei Ausfall oder Unterversorgung der Netzspannung passiv auslaufen; c) die oder jede Druckeinheit (13) in eine Druck-Ab-Stellung derart überführt wird, dass der oder jeder im Druckbetrieb an die jeweilige Bedruckstoffbahn angestellte Druckzylinder der jeweiligen Druckeinheit (13) von der jeweiligen Bedruckstoffbahn abgestellt wird.

Mit der Erfindung kann bei Ausfall oder Unterbrechung der Netzspannung eine Rollendruckmaschine definiert still gesetzt werden kann, und zwar bei geringem Investitionsaufwand, bei geringen Wartungs- und Energiekosten sowie ohne die Notwendigkeit, beim Stillsetzen die oder jede Druckstoffbahn insbesondere im Bereich der Druckwerke abzuschlagen bzw. zu durchtrennen.

Nach einer vorteilhaften Weiterbildung der Erfindung wird über die oder jede Bahnüberwachungseinrichtung bei Ausfall oder Unterversorgung der Netzspannung die Bedruckstoffbahn auf einen Bahnriss überwacht wird, wobei dann, wenn eine Bahnüberwachungseinrichtung einen Bahnriss detektiert, über dieselbe elektronisch eine mit der jeweiligen Bahnüberwachungseinrichtung zusammenwirkende Bahnabschlageinrichtung ausgelöst wird, über welche die gerissene Bedruckstoffbahn durchtrennt wird. Sollte ein Bahnriss auftreten, so kann eine Gefährdung der Rollendruckmaschine durch z .B. sogenannte Wickler vermieden werden.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

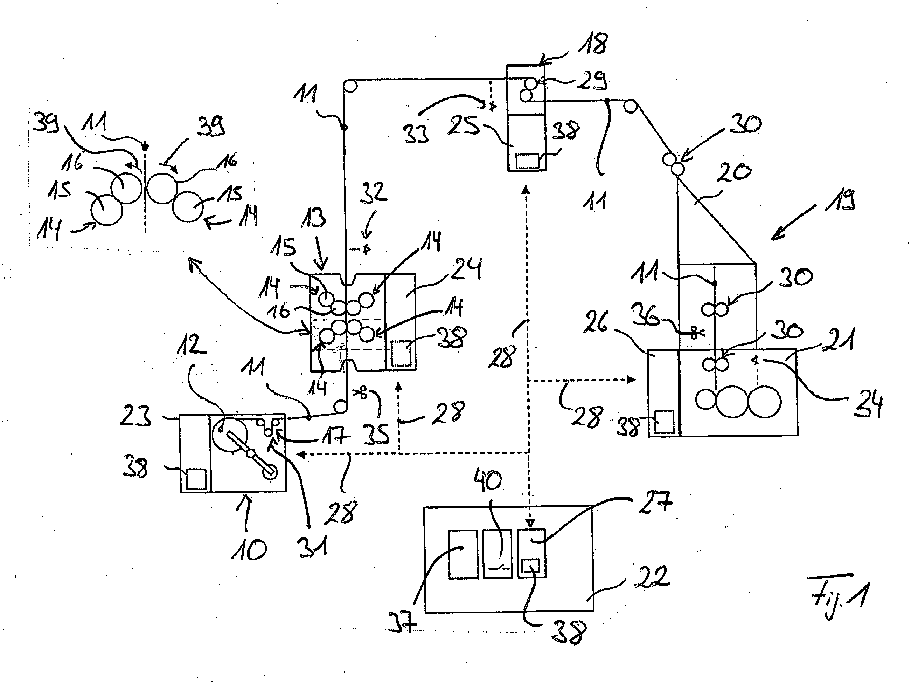

- Fig. 1:: eine schematisierte Darstellung einer Rollendruckmaschine zur Verdeutlichung des erfindungsgemäßen Verfahrens zum Stillsetzten einer Rollendruckmaschine.

Die Erfindung betrifft ein Verfahren zum Stillsetzen einer Rollendruckmaschine bei Ausfall oder Unterversorgung der Netzspannung. Das erfindungsgemäße Verfahren wird nachfolgend unter Bezugnahme auf Fig. 1 im Detail beschrieben, wobei Fig. 1 ein exemplarisches Ausführungsbeispiel einer Rollendruckmaschine zeigt, bei welcher das erfindungsgemäße Verfahren zum Einsatz kommen kann.

So zeigt Fig. 1 eine Rollendruckmaschine mit einem Rollenwechsler 10, wobei der Rollenwechsler 10 eine zu bedruckende Bedruckstoffbahn 11 als Bedruckstoffrolle 12 bereithält. Dem Rollenwechsler 10 ist mindestens eine Druckeinheit 13 nachgeordnet, die dem Bedrucken der Bedruckstoffbahn 11 dient, wobei die in Fig. 1 gezeigte Druckeinheit 13 als sogenannte 8-Zylinder-Druckeinheit mit vier Druckwerken 14 und demnach vier Formzylindern 15 und vier Druckzylindern 16 ausgebildet ist. Zusätzlich zu den gezeigten Zylindern 15 und 16 umfasst jedes Druckwerk 14 weiterhin ein nicht gezeigtes Farbwerk sowie vorzugsweise ein nicht gezeigtes Feuchtwerk. Es können mehrere derartige Druckeinheiten 13 vorhanden sein.

Ferner verfügt die in Fig. 1 gezeigte Rollendruckmaschine über ein Einzugwerk 17, welches im Ausführungsbeispiel der Fig. 1 dem Rollenwechsler 10 zugeordnet ist, und welches dem Einziehen der zu bedruckenden Bedruckstoffbahn 11 in die dem Rollenwechsler 10 unmittelbar nachgeordnete Druckeinheit 13 dient.

Alternativ kann das Einzugwerk 17 auch der dem Rollenwechsler 10 unmittelbar nachgeordneten Druckeinheit 13 zugeordnet sein.

Ferner zeigt Fig. 1 eine Bahnführungs- und/oder Wendeeinheit 18, mithilfe derer eine in der oder jeder Druckeinheit 13 bedruckte Bedruckstoffbahn 11 aus dem Bereich der oder jeder Druckeinheit 13 abgezogen und gegebenenfalls gewendet und anschließend in den Bereich einer der Bahnführungs- und/oder Wendeeinheit 18 nachgeordneten Falzeinheit 19 überführt werden kann, wobei im gezeigten Ausführungsbeispiel die Falzeinheit 19 einen Falztrichter 20 zum Längsfalzen der bedruckten Bedruckstoffbahn 11 sowie einen Falzapparat 21 umfasst, wobei über den Falzapparat 21 von der bedruckten und längsgefalzten Bedruckstoffbahn 11 durch Querschneiden Exemplare abgetrennt und gegebenenfalls weiter zum Beispiel durch Querfalzen gefalzt werden.

Sämtliche oben beschriebenen Druckmaschinenaggregate, also der Rollenwechsler 10, die Druckeinheit 13, das Einzugwerk 17, die Bahnführungs- und/oder Wendeeinheit 18 sowie die Falzeinheit 19, verfügen über im Druckbetrieb von nicht gezeigten elektrischen Antrieben angetriebene Zylinder und/oder Walzen, wobei im Druckbetrieb sämtliche elektrischen Antriebe der Druckmaschinenaggregate mit einer hochspannungsseitigen Versorgungsspannung versorgt werden, nämlich über eine sogenannte Schaltanlage 22 der Rollendruckmaschine, die an ein Stromversorgungsnetz bzw. Spannungsversorgungsnetz angeschlossen ist.

Wie Fig. 1 zeigt, sind dem das Einzugwerk 17 umfassenden Rollenwechsler 10, der Druckeinheit 13, der Bahnführungs- und/oder Wendeeinheit 18 sowie der Falzeinheit 19 jeweils elektronische Baugruppen 23, 24, 25 und 26 zugeordnet, mithilfe derer der Betrieb des jeweiligen Druckmaschinenaggregats gesteuert und/oder geregelt werden kann. Diese elektronischen Baugruppen 23, 24, 25 und 26 werden im Druckbetrieb ebenfalls ausgehend von der Schaltanlage 22 mit Spannung versorgt, nämlich mit einer niederspannungsseitigen Steuerspannung. Wie Fig. 1 zeigt, umfasst auch die Schaltanlage 22 derartige elektronische Baugruppen 27, die gemäß Fig. 1 im Sinne der gestichelten Pfeile 28 mit den elektronischen Baugruppen 23, 24, 25 und 26 Steuersignale austauschen.

Wie bereits erwähnt, werden im Druckbetrieb die elektronischen Baugruppen 23, 24, 25, 26 und 27 mit niederspannungsseitiger Steuerspannung versorgt. Sämtliche Antriebe von Rollenwechsler 10, Einzugwerk 17, Druckeinheit 19, Bahnführungs- und/oder Wendeeinheit 18 sowie Falzeinheit 19 werden im Druckbetrieb mit hochspannungsseitiger Versorgungsspannung versorgt, wobei im Bereich der Druckeinheit 13 die elektrischen Antriebe insbesondere dem Antreiben der Zylinder 15, 16 dienen, wobei im Bereich der Bahnführungs- und/oder Wendeeinheit 18 die elektrischen Antriebe dem Antreiben von Bahnführungs- und/oder Wendewalzen 29 dienen, und wobei im Bereich der Falzeinheit 19 die elektrischen Antriebe dem Antreiben insbesondere von Zugwalzen 30 dienen. Im Bereich des Einzugswerks 17 sind Einzugwalzen 31 elektromotorisch angetrieben.

Der elektrische Antrieb des Rollenwechslers 10, der bei Ausführung eines Rollenwechsels zwischen einer ablaufenden Bedruckstoffrolle und einer neuen Bedruckstoffrolle dem Beschleunigen der neuen Bedruckstoffrolle auf Maschinengeschwindigkeit dient, wird nach Ausführung des Rollenwechsels typischerweise generatorisch betrieben.

Weiterhin zeigt Fig. 1, dass die Rollendruckmaschine mehrere Überwachungseinrichtungen 32, 33 und 34 umfasst, wobei die Überwachungseinrichtungen 32 und 33 die Bedruckstoffbahn 11 im Hinblick auf einen Bahnriss überwachen und wobei die Überwachungseinrichtung 34 die Anzahl der im Falzapparat 21 produzierten Exemplare überwacht. Dann, wenn eine der Überwachungseinrichtungen 32 und 33 im Druckbetrieb einen Bahnriss feststellt, kann über eine Bahnabschlageinrichtung 35 die Bedruckstoffbahn 11 zwischen dem Einzugwerk 17 und der ersten Druckeinheit 13 durchtrennt werden. Dann, wenn die Überwachungseinrichtung 34 eine Unregelmäßigkeit in der Anzahl der vom Falzapparat 21 produzierten Exemplare erkennt, kann die Bedruckstoffbahn 11 im Bereich der Falzeinheit 19 mithilfe einer Bahnabschlageinrichtung 36 durchtrennt bzw. abgeschlagen werden.

Im gezeigten Ausführungsbeispiel ist der Schaltanlage 22 eine Netzspannungsüberwachungseinrichtung 37 zugeordnet. Dann, wenn die Netzspannungsüberwachungseinrichtung 37 einen Ausfall oder eine Unterversorgung der Netzspannung erkennt, wird die Rollendruckmaschine mit dem erfindungsgemäßen Verfahren still gesetzt, nämlich derart, dass lediglich die niederspannungsseitige Steuerspannung für die elektronischen Baugruppen 23, 24, 25, 26 und 27 der Druckmaschineaggregate 10, 13, 18, 19 und 22 gepuffert wird, sodass die oder jede Bahnüberwachungseinrichtung 32, 33 und 34 bei Ausfall oder Unterversorgung der Netzspannung aktiv bleibt und weiter betrieben werden kann. Diese Abpufferung der niederspannungsseitigen Steuerspannung erfolgt über mindestens einen Energiespeicher, wobei im Ausführungsbeispiel der Fig. 1 jedem Druckmaschinenaggregat 10, 13, 18, 19 und 22, nämlich den elektronischen Baugruppen 23, 24, 25, 26 und 27 derselben, ein separater, druckmaschinenaggregatindividueller Energiespeicher 38 zugeordnet ist.

Dabei kann es sich zum Beispiel jeweils um einen 24-Volt-Puffer bzw. eine entsprechende Batterie handeln, über die auch nach Ausfall oder Unterversorgung der Netzspannung die elektronischen Baugruppen 23, 24, 25, 26 und 27, insbesondere die Überwachungseinrichtungen 32, 33 und 34, weiter betrieben werden können.

Es erfolgt demnach eine Pufferung der niederspannungsseitigen Steuerspannung, die hochspannungsseitige Versorgungsspannung für die elektrischen Antriebe der Druckmaschinenaggregate 10, 13, 18 und 19 wird hingegen nicht gepuffert, sodass über die elektrischen Antriebe im Druckbetrieb aktiv angetriebene Zylinder und Walzen der Druckmaschinenaggregate 10, 13, 18 und 19 bei Ausfall oder Unterversorgung der Netzspannung passiv auslaufen.

Ferner wird erfindungsgemäß die oder jede Druckeinheit 13 der Rollendruckmaschine bei Ausfall oder Unterversorgung der Netzspannung in eine Druck-Ab-Stellung derart überführt, dass der oder jeder im Druckbetrieb an die jeweilige Bedruckstoffbahn angestellte Druckzylinder 16 der Druckeinheit 13 von der Bedruckstoffbahn 11 abgestellt wird, wobei dieses Abstellen der Druckzylinder 16 bei Überführung derselben in die Druck-Ab-Stellung im vergrößerten Detail der Fig. 1 durch Pfeile 39 gezeigt ist.

Die Bahnführungs- und/oder Wendewalzen 29 der Bahnführungs- und/oder Wendeeinheit 18 sowie die Zugwalzen 30 der Falzeinheit 19 bleiben hingegen bei Ausfall oder Unterbrechung der Netzspannung an der Bedruckstoffbahn 11 angestellt, sodass bei in die Druck-Ab-Stellung überführter Druckeinheit 13 über die Bedruckstoffbahn 11 eine Kopplung zwischen Rollenwechsler 10 bzw. Einzugwerk 17, Bahnführungs- und/oder Wendeeinheit 18 und Falzeinheit 19 aufrechterhalten bleibt.

Die Bedruckstoffbahn 11 kann über Trägheitskräfte der Walzen 29 und 30 von Bahnführungs- und/oder Wendeeinheit 18 und Falzeinheit 19 ohne Zufuhr von hochspannungsseitiger Versorgungsspannung zu den elektrischen Antrieben derselben bis zum Stillstand der Bedruckstoffbahn passiv, kontrolliert und definiert weiter transportiert werden kann.

Hierbei wird über den Rollenwechsler 10 und/oder das Einzugwerk 17 eine Mindestbahnspannung der Bedruckstoffbahn 11 aufrechterhalten, nämlich über den generatorisch und bremsend betriebenen, elektrischen Antrieb des Rollenwechslers 10 und/oder über eine zusätzliche, pneumatisch oder hydraulisch betriebene Bahnbremse des Rollenwechslers 10 oder des Einzugswerks 17. Eine solche zusätzliche, pneumatisch, hydraulisch oder elektrisch oder betriebene Bahnbremse wird elektronisch über elektronische Baugruppe 23 und/ 27 angesteuert pneumatisch, hydraulisch oder elektrisch ausgelöst, nämlich über einen nicht gezeigten Pneumatikdruckspeicher oder Hydraulikdruckspeicher der Rollendruckmaschine.

Die Überführung der oder jeder Druckeinheit 13 in die Druck-Ab-Stellung bei Ausfall oder Unterversorgung der Netzspannung wird ebenfalls elektronisch ausgelöst, nämlich über elektronische Baugruppen 24 und/oder 27, wobei die Druck-Ab-Bewegung 39 der Druckzylinder 16 pneumatisch oder hydraulisch durch entsprechende Druckversorgung über den nicht gezeigten Pneumatikdruckspeicher oder Hydraulikdruckspeicher der Rollendruckmaschine bewirkt wird.

Bei Ausfall oder Unterversorgung der Netzspannung wird demnach ausschließlich die niederspannungsseitige Steuerspannung für die elektrischen Baugruppen 23, 24, 25, 26 und 27 über die Energiespeicher 38 abgepuffert, die hochspannungsseitige Versorgungsspannung für die elektrischen Antriebe hingegen wird nicht abgepuffert, sodass die von den elektrischen Antrieben im Druckbetrieb angetriebenen Zylinder und Walzen bei Ausfall oder Unterversorgung der Netzspannung frei bzw. passiv auslaufen.

Über die niederspannungsseitige Steuerspannung wird der Weiterbetrieb der elektronischen Baugruppen 23, 24, 25 und 26, insbesondere der Überwachungseinrichtungen 32, 33 und 34, weiter aufrecht erhalten, sodass demnach bei Ausfall oder Unterversorgung der Netzspannung einerseits über die elektrischen Baugruppen 24 der Druckeinheit 13 die Druck-Ab-Bewegung 39 der Druckzylinder 16 elektronisch ausgelöst werden kann, und dass weiterhin die Bedruckstoffbahn 11 auf einen Bahnriss hin überwacht werden kann.

In Fig. 1 erfolgt die Pufferung der niederspannungsseitigen Steuerspannung über die druckmaschinenaggregatindividuellen Energiespeicher 38. Es kann jedoch im Unterschied hierzu auch ein zentraler Energiespeicher zur Pufferung der niederspannungsseitigen Steuerspannung vorhanden sein.

Wie bereits ausgeführt, wird bei Ausfall oder Unterversorgung der Netzspannung über die Pufferung der niederspannungsseitigen Steuerspannung der Weiterbetrieb der Überwachungseinrichtungen 32, 33, 34 ermöglicht, wobei dann, wenn eine der Bahnüberwachungseinrichtungen 32, 33 einen Bahnriss detektiert oder die Überwachungseinrichtung 34 eine Abweichung für im Falzapparat 21 abgetrennte Exemplare feststellt, über die jeweilige Überwachungseinrichtung 32, 33, 34 elektronisch die mit derselben zusammenwirkende Bahnabschlageinrichtung 35, 36 ausgelöst wird, um das Durchtrennen der Bedruckstoffbahn 11 auszuführen, wobei im Anschluss an das elektronische Auslösen der Bahnabschlageinrichtung 35,36 dieselbe pneumatisch oder hydraulisch von dem nicht gezeigten Pneumatikdruckspeicher oder Hydraulikdruckspeicher aus betrieben wird, um das Durchtrennen der Bedruckstoffbahn 11 pneumatisch oder hydraulisch auszuführen.

Bei Ausfall oder Unterversorgung der Netzspannung kann weiterhin im Bereich des Einzugwerks 17, welches im gezeigten Ausführungsbeispiel dem Rollenwechsler 10 zugeordnet ist, eine im Betrieb an die jeweilige Bedruckstoffbahn angestellte, als Presswalze dienende Einzugwalze 31 abgestellt werden.

Bei Betätigung eines Hauptschalters 40 der Schaltanlage 22 kann die Rollendruckmaschine auch auf die obige Art und Weise still gesetzt werden. Dann, wenn die Netzspannungsüberwachungseinrichtung 37 einen Ausfall oder eine Unterversorgung der Netzspannung erkennt, öffnet dieselbe vorzugsweise den Hauptschalter 40 und löst so das erfindungsgemäße Stillsetzten aus.

### Bezugszeichenliste

- 10: Rollenwechsler
- 11: Bedruckstoffbahn
- 12: Bedruckstoffrolle
- 13: Druckeinheit
- 14: Druckwerk
- 15: Formzylinder
- 16: Druckzylinder
- 17: Einzugwerk
- 18: Bahnführungs- und/oder Wendeeinheit
- 19: Falzeinheit
- 20: Falztrichter
- 21: Falzapparat
- 22: Schaltanlage
- 23: elektronische Baugruppen
- 24: elektronische Baugruppen
- 25: elektronische Baugruppen
- 26: elektronische Baugruppen
- 27: elektronische Baugruppen
- 28: Steuersignale
- 29: Bahnführungs- und/oder Wendewalze
- 30: Zugwalze
- 31: Einzugwalze
- 32: Überwachungseinrichtung
- 33: Überwachungseinrichtung
- 34: Überwachungseinrichtung
- 35: Bahnabschlageinrichtung
- 36: Bahnabschlageinrichtung
- 37: Netzspannungsüberwachungseinrichtung
- 38: Energiespeicher
- 39: Druck-Ab-Bewegung
- 40: Hauptschalter

## Patentansprüche

1. Verfahren zum Stillsetzten einer Rollendruckmaschine mit mehreren Druckmaschinenaggregaten, nämlich mit mindestens einem Rollenwechsler (10) zum Bereithalten einer zu bedruckenden Bedruckstoffbahn, mit mindestens einer dem jeweiligen Rollenwechsler (10) in Transportrichtung einer zu bedruckenden Bedruckstoffbahn gesehen nachgeordneten, mindestens einen Druckzylinder aufweisenden Druckeinheit (13) zum Bedrucken der jeweiligen Bedruckstoffbahn, mit einem der oder jeder Druckeinheit (13) in Transportrichtung einer zu bedruckenden Bedruckstoffbahn gesehen nachgeordneten Bahnführungs- und/oder Wendeeinheit (18), mit einem der Bahnführungs- und/oder Wendeeinheit (18) nachgeordneten Falzeinheit (19) zum Falzen der jeweiligen bedruckten Bedruckstoffbahn und zum Abtrennen von Druckexemplaren von derselben, und mit mindestens einer Bahnüberwachungseinrichtung (32, 33) zur Überwachung der Bedruckstoffbahn, **dadurch gekennzeichnet, dass** bei einem Ausfall oder einer Unterversorgung der Netzspannung:
a) eine Steuerspannung für elektronische Baugruppen (23, 24, 25, 26, 27) der Druckmaschinenaggregate (10, 13, 18, 19) über mindestens einen Energiespeicher (38) gepuffert wird,
b) eine leistungsseitige Versorgungsspannung für elektrische Antriebe der Druckmaschinenaggregate (10, 13, 18, 19) nicht gepuffert wird, sodass über die elektrischen Antriebe im Druckbetrieb aktiv angetriebene Zylinder und Walzen der Druckmaschinenaggregate bei Ausfall oder Unterversorgung der Netzspannung passiv auslaufen;
c) die oder jede Druckeinheit (13) in eine Druck-Ab-Stellung derart überführt wird, dass der oder jeder im Druckbetrieb an die jeweilige Bedruckstoffbahn angestellte Druckzylinder der jeweiligen Druckeinheit (13) von der jeweiligen Bedruckstoffbahn abgestellt wird.

2. Verfahren nach Anspruch 1, **dadurch gekennzeichnet, dass** die Steuerspannung für die elektronischen Baugruppen (23, 24, 25, 26, 27) über einen zentralen Energiespeicher gepuffert wird.

3. Verfahren nach Anspruch 1, **dadurch gekennzeichnet, dass** die Steuerspannung für die elektronischen Baugruppen (23, 24, 25, 26, 27) über dezentrale, druckmaschinenaggregatindividuelle Energiespeicher (38) gepuffert wird.

4. Verfahren nach einem der Ansprüche 1 bis 3, **dadurch gekennzeichnet, dass** über die oder jede Bahnüberwachungseinrichtung (32, 33) bei Ausfall oder Unterversorgung der Netzspannung die Bedruckstoffbahn auf einen Bahnriss überwacht wird, wobei dann, wenn eine Bahnüberwachungseinrichtung (32, 33) einen Bahnriss detektiert, über dieselbe elektronisch eine mit der jeweiligen Bahnüberwachungseinrichtung (32, 33) zusammenwirkende Bahnabschlageinrichtung (35) ausgelöst wird, über welche die gerissene Bedruckstoffbahn durchtrennt wird.

5. Verfahren nach Anspruch 4, **dadurch gekennzeichnet, dass** die jeweilige Bahnabschlageinrichtung (35) elektronisch angesteuert und pneumatisch oder hydraulisch betrieben wird.

6. Verfahren nach einem der Ansprüche 1 bis 5, **dadurch gekennzeichnet, dass** bei Ausfall oder Unterversorgung der Netzspannung im Bereich eines dem oder jedem Rollenwechsler (10) oder eines der dem jeweiligen Rollenwechsler (10) unmittelbar nachgeordneten Druckeinheit (13) zugeordneten Einzugwerks (17) eine im Druckbetrieb an die jeweilige Bedruckstoffbahn angestellte Presswalze (31) von der Bedruckstoffbahn abgestellt wird.

7. Verfahren nach einem der Ansprüche 1 bis 6, **dadurch gekennzeichnet, dass** bei Ausfall oder Unterversorgung der Netzspannung über den Rollenwechsler (10) und/oder ein Einzugwerk (17) eine Mindestbahnspannung der jeweiligen Bedruckstoffbahn aufrechterhalten wird.

8. Verfahren nach Anspruch 7, **dadurch gekennzeichnet, dass** die Mindestbahnspannung über einen bei Ausfall oder Unterversorgung der Netzspannung generatorisch und bremsend betriebenen elektrischen Antrieb des Rollenwechslers (10) und/oder eine pneumatisch, hydraulisch oder elektrisch betriebene Bahnbremse des Rollenwechslers (10) oder Einzugwerks (17) aufrechterhalten wird.

9. Verfahren nach einem der Ansprüche 1 bis 8, **dadurch gekennzeichnet, dass** die Überführung der oder jeder Druckeinheit (13) in die Druck-Ab-Stellung elektronisch gesteuert wird, und dass der oder jeder Druckzylinder (16) pneumatisch oder hydraulisch abgestellt wird.
